# EUROPEAN PATENT SPECIFICATION

(11) **EP 2 048 869 B1**
(45) Date of publication and mention of the grant of the patent: **26.10.2011**
(21) Application number: 08163718.3
(22) Date of filing: 04.09.2008
(51) Int. Cl.: H04N 1/60

(54) **Method for colour interpolation**
Verfahren zur Farbinterpolation
Procédé d'interpolation de couleurs

(30) Priority: 12.10.2007 EP 07019979
(43) Date of publication of application: 15.04.2009
(73) Proprietor: Vidiom SA, 1292 Genève (CH)
(72) Inventor: Mazanik, Michal, 53-025 Wroclaw (PL)
(74) Representative: Pawlowski, Adam

(56) References cited:
- EP-A- 0 749 099
- MEYER, ERIC A.: "Color Blender" INTERNET ARTICLE, [Online] 11 October 2007 (2007-10-11), XP002525747 Retrieved from the Internet: URL:http://web.archive.org/web/20071011001 639/http://meyerweb.com/eric/tools/color-b lend/> [retrieved on 2009-04-23]
- HOLDSWORTH, JOEL: "A pair of classes for rendering and editing colourful washes" INTERNET ARTICLE, [Online] 29 March 2003 (2003-03-29), XP002525748 Retrieved from the Internet: URL:http://www.codeproject.com/KB/miscctrl /gradient.aspx> [retrieved on 2009-04-23]
- "Color blending prototype" INTERNET ARTICLE, [Online] 10 July 2004 (2004-07-10), XP002525749 Retrieved from the Internet: URL:http://board.flashkit.com/board/showth read.php?threadid=587871> [retrieved on 2009-04-23]

## Description

The invention presented herein relates to graphics processing systems, and more particularly, to graphics processing systems performing interpolation of colour between two pixels each having an assigned colour value.

Interpolation of pixels attributes are well known in computer graphics. They are mathematical calculations used to determine what value of an attribute are to be assigned to a pixel, based upon the values of corresponding attributes of its neighbours. Such values may for example be colour of a pixel. Colour interpolations are common in the art and are executed frequently. Therefore each gain in performance of an interpolation has a significant impact on overall performance of the graphics system. Such graphics system may be a two or three dimensional graphics generating system, a printing system any other system using interpolation techniques. Recently such systems also include 2.5D graphics systems where a computer system uses 2D computer graphics to visually simulate 3D computer graphics.

Hence, there exists a problem of how to decrease performance requirements without compromising users experience while looking at video or graphical data output by the aforementioned devices.

It is therefore an objective of the invention presented herein to provide a graphics data processing method, for colour interpolation, that has low computing speed requirements and that will not lead to a noticeable picture quality decrease.

The object of the invention is a method for colour interpolation between colours of two pixels, as specified in claim 1. Further preferred and advantageous embodiments of the invention are specified in the dependent claims.

The object of the invention is also a computer program comprising program code means for performing all the steps of the above-described method when said program is run on a computer as well as a computer-readable medium having computer-executable instructions performing all the steps of the above-described computer-implemented method.

This and other objects of the invention presented herein are accomplished in accordance with the principles of the presented invention by providing an improved colour interpolation method. Further details and features of the system and method, its nature and various advantages will become more apparent from the accompanying drawing and the following detailed description of the preferred embodiments shown in a drawing, in which:
FIG. 1 shows an example of typical colour interpolation;
FIG. 2 presents an example of colour interpolation according to the present method;
FIG. 3 depicts an example of interleaving of colour components updates;
FIG. 4 is a block diagram illustrating steps of interpolation method.

Many computer systems, that generate graphics, allow to fill an area with a single and/or multiple colours. In the case of multiple colours, computer programs can assigned, while the pixel on the right side has R1, G1 and B1 colour component values.

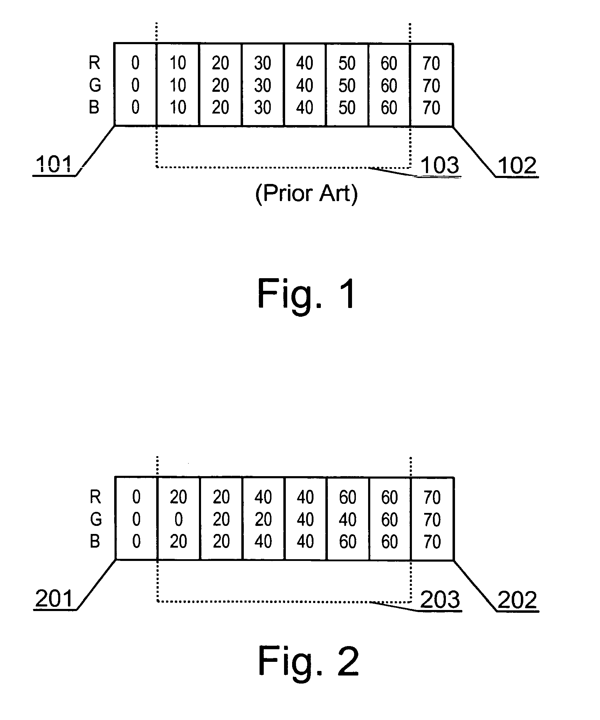

FIG. 1 shows an example of typical colour interpolation as known from the prior art, for example as presented in the Internet article "Color blender" (EPO Document reference XP002525747). In this example RGB colours have been used. The first RGB colour components 101 all equal 0. The second RGB colour components 102 all equal 70. Nevertheless it is to be understood that all values may be used and components values need not be equal. The colours to be interpolated are in the range 103. Colour slope in this case equals (70 - 0) / (7 - 0) wherein 70 and 0 are colour components values and 7 and 0 are for example X coordinates of first and second given pixels. Therefore colour slope is 10 for all colour components. Next for each interpolated pixel each colour component is modified by colour slope.

The present method introduces a new concept in colour interpolation that is based on interleaving of colour components updates. It will be obvious to one skilled in the art that the method may be implemented in software, hardware or a combination of both.

In order to reduce the number of mathematical operations required, the method divides colour channels, of a given colour scheme, into at least two groups and updates each group's colour components every K pixels instead of every single pixel, where K is the number of colour components groups. This allows to process i.e. interpolate more than a single pixel in one loop iteration. For example the first group of colour components is updated every odd pixel and the second group of colour components is updated every even pixel. This guarantees, that moving one pixel to the right will always cause some change in a final colour. This may be defined in a pseudocode as:

```
 Rf2 = 2 * Rf, Gf2 = 2 * Gf, Bf2 = 2 * Bf;
 for (...) {
       putpixel(i, R,G,B);
       R = R + Rf2;
       B = B + Bf2;
       putpixel(i+1, R,G,B);
       G = G + Bf2;
 }
```

The values of Rf, Gf and Bf are commonly referred to in the art as a colour slope. The multiplier by two is a colour slope multiplier, which is to compensate for the fact that the additions are two times less frequent in this particular exemplary embodiment. The colour slope will typically be calculated as linear and equals the difference in the colour component value divided by the number of pixels. Nevertheless non-linear calculations are permitted wherein colour slope may vary depending on location of the pixel.

Amortized cost, to execute the interpolation according to the present method, decreases from 3 additions per pixel to 1.5 addition. For the human eye, the pictures generated by the present method look almost identical to that, which are generated using the common method of calculating each and every colour channel for each pixel, which in the RGB colour scheme requires 3 additions per pixel.

Depending on system requirements and quality constraints the method may also be applied in other colour systems. Different results will be obtained because some colour systems are more sensitive to changes of specific colour components. For example, changing luminance in HSL colour system every two pixels will be more visible than changing one of HS colour channels.

It has been found, during experiments, that the human eye is more sensible to changes in brightness than to changes in colour. The method presented herein makes use of this fact to gain additional performance. Changes in colour, caused by the new algorithm, are almost unnoticeable to the viewer in comparison to the typical computation of interpolated colours.

Therefore in order to gain performance one can modify the typical case of interpolating each of the colour components between the colour component values in the first colour and the colour component values in the second colour. It has been found that a colour of a pixel could be interpolated basing on an origin colour by copying at least one colour component from the corresponding colour component of the neighbouring pixel and calculating at least one other colour component. In one embodiment, of the present invention, the neighbouring colour of a pixel can be for example the previous or a preceding pixel's colour.

FIG. 2 shows an example of colour interpolation according to the present method. In this example RGB colours have been used. The first colour components 201 all equal 0. The second colour components 202 all equal 70. Nevertheless it is to be understood that all values may be used and colour components need not be equal. The colours to be interpolated are in the range 203. Colour slope in this case equals (70 - 0) / (7 - 0) wherein 70 and 0 are colour components and 7 and 0 are for example X coordinates of first and second given pixels. Therefore colour slope, calculated for each and every colour component, is 10 in this example for all colour components. Next for each interpolated pixel each colour component is modified by the colour slope multiplied by a colour slope multiplier, which in this case is equal to two since colour components RGB have been divided into two groups where the first colour components group comprises the R and the B colour components and the second colour components group comprises only the G colour component. As can be seen, in the presented example, every second colour remains as in the typical method, while remaining colours are insignificantly different from those in the typical method. However this change results in significant overall performance increase.

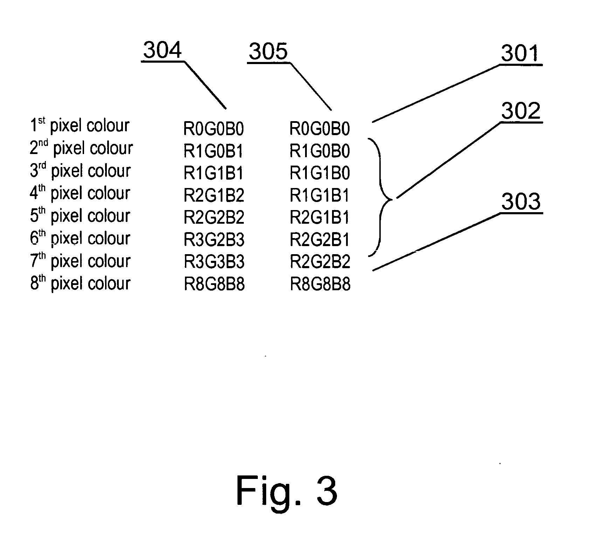

FIG. 3 depicts an example of interleaving of colour components updates according to the present method. In this example there are eight pixels 301, 302, 303 wherein pixels 301 and 303 are start and end of a line and pixels 302 are to be interpolated. Pixel 301 has an assigned colour value of R0G0B0 and pixel 303 has an assigned colour value of R8G8B8. There are two cases presented, wherein the first case 304 presents an example where one group of colour components comprises the Red and Blue colour components and the second group of colour components comprises only the Green colour component. The second case 305 presents an example where the first group of colour components comprises only the Red colour component, the second group of colour components comprises only the Green colour component and the third group of colour components comprises only the Blue colour component. The present method as shown in examples in Fig. 3 is based on defining colour of each interpolated pixel 302 between the first pixel 301 colour and the second pixel 303 colour, by copying at least one colour component from the corresponding colour component of the previous pixel and calculating at least one other colour component. For example in case of the 2^{nd} pixel colour of the case 304 it means that colour components of one group, in this case G0, will be copied from the corresponding previous pixel's colour components, which in this case is the pixel 301. The other colour components will be calculated and in this example those colour components are R1 and B1. Similarly all following pixels are interpolated according to this principle. The colour slope multiplier is two in case of the 304 example and three in the second example 305 accordingly.

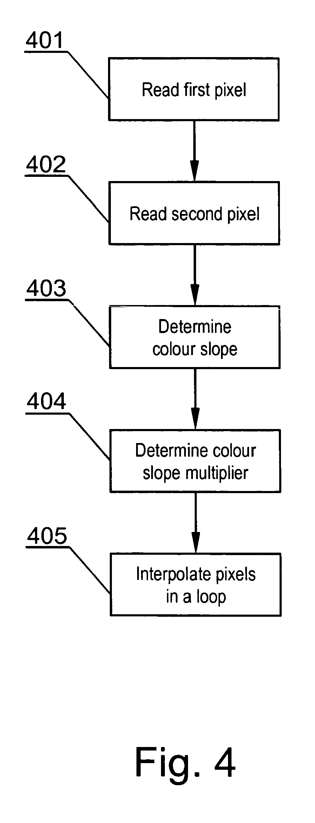

FIG. 4 is a block diagram illustrating steps of the present interpolation method. The first step of the procedure 401 is to read the first defined pixel wherein the first pixel has an assigned colour attribute in a given colour scheme, for example RGB. The second step of the procedure 402 is to read the second defined pixel wherein the second pixel has an assigned colour attribute in a given colour scheme, for example RGB. These pixel's colours define start and end points of the colour interpolation. Next, at step 403, a colour slope is calculated, which may be defined according to any mathematical formulae. Subsequently, in step 404 of the procedure, a colour slope multiplier is set, which depends on the number of groups of colour components, into which available colour components will be divided, this of course depends on a colour scheme. Examples of division have been shown with reference to Fig. 3. The last step of the method is to do the actual interpolation for all colours of pixels in a loop 405. The interpolated colours of pixels will typically be stored in a memory and displayed when required.

Performance tests have shown that the method, according to the present invention, results in improved performance by about 25% as presented in the example in Fig. 2.

It can be easily recognised, by one skilled in the art, that the aforementioned method may be performed by one or more computer programs. Such computer programs are typically executed by utilizing the computing resources in a computing device such as personal digital assistants, cellular telephones, receivers and decoders of digital television or the like. Applications are stored in non-volatile memory, for example flash memory or volatile memory, for example RAM and are executed by a processor. These memories are exemplary recording media for storing computer programs comprising computer-executable instructions performing all the steps of the computer-implemented method according to the invention presented herein.

## Claims

1. A method for colour interpolation in blending the colours of two pixels, the method comprising the steps of:
- defining the colour of a first pixel, the colour having at least two colour components;
- defining the colour of a second pixel, the colour having the same colour components as the colour of a first pixel, wherein the values of colour components of the colour of the second pixel are different from the values of colour components of the colour of the first pixel,
- defining a plurality of interpolated pixels, having the same colour components as said first pixel and said second pixel, between said first pixel and said second pixel,
- for each colour componet, defining a colour slope calculated as a function of the corresponding first pixel colour component, the second pixel colour component and the number of pixels to be interpolated,
the method **characterized in that**:
- the colour components of the colour of each interpolated pixel are determined by
- copying the value of at least one colour component from the corresponding colour component of the neighbouring pixel; and
- calculating the value of at least one other colour component as a function of the colour slope for the particular colour component;
- such that all colour components are either copied or calculated.

2. The method according to claim 1 **characterized in that** the colour components are Red, Green and Blue.

3. The method according to claim 1 **characterized in that** the color slope is calculated as a difference between the corresponding colour of the first pixel and the second pixel divided by the number of pixels to be interpolated and the calculating step includes modifying a corresponding colour component of the neighbouring pixel by the colour slope multiplied by a colour slope multiplier, the colour slope multiplier being inversely proportional to the frequency with which the colour component is calculated for consecutive interpolated pixels.

4. The method according to claim 1 **characterized in that** the plurality of interpolated pixel are defined by a series of steps, comprising repeated steps of:
- for one interpolated pixel, copying colour values from a neighbouring pixel for a first group of colour components and calculating colour values for a second group of colour components
- for a consecutive interpolated pixel colour, copying colour values from a neighbouring pixel for the second group of colour components and calculating colour values for the first group of colour components

5. The method according to claim 4 **characterized in that** the first group of colour components comprises a single colour component or the second group of colour components comprises a single colour component.

6. The method according to claim 1 **characterized in that** the neighbouring pixel is the previous pixel.

7. The method according to claim 1 **characterized in that** the neighbouring pixel is the preceding pixel.

8. A computer program comprising program code means for performing all the steps of a method as claimed in any of claims 1 to 7 when said program is run on a computer.

9. A computer readable medium having means for performing all the steps of the computer-implemented method according to any of claims 1 to 7.

## Patentansprüche

1. Verfahren zur Farbinterpolation beim Mischen der Farben zweier Pixel, wobei das Verfahren die Schritte umfasst:
- Definieren der Farbe eines ersten Pixels, wobei die Farbe wenigstens zwei Farbkomponenten aufweist;
- Definieren der Farbe eines zweiten Pixels, wobei die Farbe die gleichen Farbkomponenten wie die Farbe eines ersten Pixels aufweist, wobei die Werte von Farbkomponenten der Farbe des zweiten Pixels von den Werten von Farbkomponenten der Farbe des ersten Pixels verschieden sind,
- Definieren einer Mehrzahl von interpolierten Pixeln zwischen dem ersten Pixel und dem zweiten Pixel, welche die gleichen Farbkomponenten wie das erste Pixel und das zweite Pixel aufweisen,
- Definieren eines Farbgefälles für jede Farbkomponente, welche als eine Funktion der zugehörigen Farbkomponente des ersten Pixels, der Farbkomponente des zweiten Pixels und der Anzahl von zu interpolierenden Pixel berechnet wird,
wobei das Verfahren **dadurch gekennzeichnet ist, dass**
- die Farbkomponenten der Farbe von jedem interpolierten Pixel bestimmt werden durch:
- Kopieren des Wertes von wenigstens einer Farbkomponente von der zugehörigen Farbkomponente des Nachbarpixels; und
- Berechnen des Wertes von wenigstens einer anderen Farbkomponente als eine Funktion des Farbgefälles für die bestimmte Farbkomponente;
- so dass alle Farbkomponenten entweder kopiert oder berechnet werden.

2. Verfahren nach Anspruch 1, **dadurch gekennzeichnet,**
**dass** die Farbkomponenten Rot, Grün und Blau sind.

3. Verfahren nach Anspruch 1, **dadurch gekennzeichnet,**
**dass** das Farbgefälle berechnet wird als eine Differenz zwischen der Farbe des ersten Pixels und des zweiten Pixels dividiert durch die Anzahl von zu interpolierenden Pixeln,
und **dass** der Berechnungsschritt ein Modifizieren einer zugehörigen Farbkomponente des Nachbarpixels durch das mit einem Farbgefällemultiplikator multipliziertes Farbgefälle umfasst,
wobei der Farbgefällemultiplikator umgekehrt proportional zu der Frequenz ist, mit welcher die Farbkomponente für aufeinanderfolgend interpolierte Pixel berechnet wird.

4. Verfahren nach Anspruch 1, **dadurch gekennzeichnet,**
**dass** die Mehrzahl von interpolierten Pixeln durch eine Reihe von Schritten definiert werden, welche eine Wiederholung der Schritten umfasst:
- für ein interpoliertes Pixel, Kopieren von Farbwerten von einem Nachbarpixel für eine erste Gruppe von Farbkomponenten und Berechnen von Farbwerten für eine zweite Gruppe von Farbkomponenten
- für eine aufeinanderfolgend interpolierte Pixelfarbe, Kopieren von Farbwerten von einem Nachbarpixel für die zweite Gruppe von Farbkomponenten und Berechnen von Farbwerten für die erste Gruppe von Farbkomponenten.

5. Verfahren nach Anspruch 4, **dadurch gekennzeichnet,**
**dass** die erste Gruppe von Farbkomponenten eine einzelne Farbkomponente umfasst oder die zweite Gruppe von Farbkomponenten eine einzelne Farbkomponente umfasst.

6. Verfahren nach Anspruch 1, **dadurch gekennzeichnet,**
**dass** das Nachbarpixel das vorherige Pixel ist.

7. Verfahren nach Anspruch 1, **dadurch gekennzeichnet,**
**dass** das Nachbarpixel das vorangehende Pixel ist.

8. Computerprogramm,
umfassend Programmcodemittel zum Ausführen aller Schritte eines Verfahrens nach einem der Ansprüche 1 bis 7, wenn das Programm auf einem Computer ausgeführt wird.

9. Computerlesbares Medium,
welches Mittel zum Ausführen aller Schritte des computerimplementierten Verfahrens nach einem der Ansprüche 1 bis 7 aufweist.

## Revendications

1. Procédé d'interpolation de couleurs en mélangeant les couleurs de deux pixels, le procédé comprenant les étapes consistant à :
- définir la couleur d'un premier pixel, la couleur ayant au moins deux composantes de couleur ;
- définir la couleur d'un second pixel, la couleur ayant les mêmes composantes de couleur que la couleur d'un premier pixel, les valeurs des composantes de couleur de la couleur du second pixel étant différentes des valeurs de composantes de couleur de la couleur du premier pixel,
- définir une pluralité de pixels interpolés, ayant les mêmes composantes de couleur que ledit premier pixel et ledit second pixel, entre ledit premier pixel et ledit second pixel,
- pour chaque composante de couleur, définir une pente de couleur calculée en fonction de la composante de couleur correspondante du premier pixel, de la composante de couleur du second pixel et du nombre de pixels à interpoler,
le procédé étant **caractérisé en ce que** :
- les composantes de couleur de la couleur de chaque pixel interpolé sont déterminées en .
-- copiant la valeur d'au moins une composante de couleur provenant de la composante de couleur correspondante du pixel Voisin ; et
-- calculant la valeur d'au moins une autre composante de couleur en fonction de la pente de couleur pour la composante de couleur particulière ;
-- de sorte que toutes les composantes de couleur soient soit copiées, soit calculées.

2. Procédé selon la revendication 1, **caractérisé en ce que** les composantes de couleur sont le rouge, le vert et le bleu.

3. Procédé selon la revendication 1, **caractérisé en ce que** la pente de couleur est calculée sous forme d'une différence entre la couleur correspondante du premier pixel et du second pixel divisée par le nombre de pixels à interpoler et l'étape de calcul consiste à modifier une composante de couleur correspondante du pixel voisin par la pente de couleur multipliée par un multiplicateur de pente de couleur, le multiplicateur de pente de couleur étant inversement proportionnel à la fréquence avec laquelle la composante de couleur est calculée pour des pixels interpolés consécutifs.

4. Procédé selon la revendication 1, **caractérisé en ce que** la pluralité de pixels interpolés sont définis par une série d'étapes, comprenant les étapes répétées consistant à :
- pour un pixel interpolé, copier des valeurs de couleur d'un pixel voisin pour un premier groupe de composantes de couleur et calculer des valeurs de couleur pour un second groupe de composantes de couleur
- pour un pixel interpolé consécutif, copier des valeurs de couleur d'un pixel voisin pour le second groupe de composantes de couleur et calculer des valeurs de couleur pour le premier groupe de composantes de couleur

5. Procédé selon la revendication 4 ,**caractérisé en ce que** le premier groupe de composantes de couleur comprend une seule composante de couleur ou le second groupe de composantes de couleur comprend une seule composante de couleur.

6. Procédé selon la revendication 1, **caractérisé en ce que** le pixel voisin est le pixel antérieur.

7. Procédé selon la revendication 1, **caractérisé en ce que** le pixel voisin est le pixel précédent.

8. Programme d'ordinateur comprenant des moyens de code programme pour réaliser toutes les étapes d'un procédé selon l'une quelconque des revendications 1 à 7 lorsque ledit programme est exécuté sur un ordinateur.

9. Support lisible par ordinateur ayant des moyens pour réaliser toutes les étapes du procédé implémenté sur un ordinateur selon l'une quelconque des revendications 1 à 7.
